# EUROPEAN PATENT APPLICATION

(11) **EP 4 445 998 A1**
(43) Date of publication of application: **16.10.2024**
(21) Application number: 24165733.7
(22) Date of filing: 25.03.2024
(51) Int. Cl.: B01J 8/06, B01J 19/24

(54) **HYDROGEN GENERATION DEVICE AND METHOD TO PRODUCE HYDROGEN**

(30) Priority: 31.03.2023 KR 20230042745; 21.07.2023 KR 20230095367
(71) Applicant: SK Innovation Co., Ltd., Seoul 03188 (KR)
(72) Inventor: BAE, Sun Hyuk, 34124 Daejeon (KR); KIM, Jae Jeong, 34124 Daejeon (KR)
(74) Representative: Prüfer & Partner mbB Patentanwälte · Rechtsanwälte

(57) **Abstract**

The present disclosure provides a hydrogen generation device. The hydrogen generation device includes: a plurality of cylinders; a plurality of combustion units disposed in each of the plurality of cylinders to combust a fuel; a distribution unit configured to deliver the fuel supplied from the fuel supply unit to each of the plurality of combustion units by distributing the fuel in a uniform quantity; a plurality of reaction units disposed in the plurality of cylinders, respectively, to generate hydrogen by a reforming reaction of a feed supplied from a feed supply unit while the reaction units are heated by a combustion heat transmitted from the combustion unit; and a metering unit disposed between the distribution unit and the combustion unit respectively in each of the cylinders to adjust an amount of the fuel delivered from the distribution unit to the combustion unit in a fixed quantity.

## Description

### BACKGROUND

### 1. Field

The disclosure of this patent document relates to a hydrogen generation device and to a method to produce hydrogen.

### 2. Description of the Related Art

With the development of science and technology including electrical and electronic technologies, many types of energy sources have been developed and used, and the demand for energy sources has been increased in recent years. As a method for producing energy sources, energy production means using fossil fuels, nuclear power, hydropower, wind power, and the other producing methods are used.

However, in order to cope with environmental pollution problems due to exhaust gases generated by burning fossil fuels and an energy crisis due to the depletion of the fossil fuels, efforts to develop non-polluting alternative energy are being made around the world.

Hydrogen fuel is one of the non-polluting alternative energies and is significant in utilizing as infinite resources that exist on the earth. Examples of hydrogen energy application technology may include a fuel cell using hydrogen fuel. The fuel cell is configured to directly produce electricity from hydrogen fuel, and may generate electricity through an electrochemical reaction between a pair of electrodes while supplying a hydrogen gas and air as fuels. These fuel cells may be used as energy sources for electric vehicles, home use, power generation and the other device requiring electrical energy.

Methods for producing hydrogen gas used in the fuel cells may include steam reforming, ammonia reforming, partial oxidation, autothermal reforming, and water electrolysis methods. Among them, the steam reforming method is most widely used.

In the case of the steam reforming method, hydrogen may be produced by a reforming reaction of methane and steam in a high temperature state, for example, at 800°C to 900°C.

In the case of the ammonia reforming method, hydrogen is produced by a reforming reaction of ammonia in a high temperature state, for example, at 800°C to 900°C.

A conventional hydrogen generator includes: a cylinder; a combustion unit provided in the cylinder to combust a fuel; and a reaction unit provided in the cylinder to produce hydrogen by a reforming reaction of a feed, which is generated while heated by a combustion heat transmitted from the combustion unit. The feed may be methane and steam for a steam reforming reaction or ammonia for an ammonia reforming reaction.

In order to facilitate a reforming reaction of the feed, equalization of the temperature distribution for each internal region of the cylinder is required. However, as a scale of the cylinder is increased, it may be difficult to equalize the temperature distribution for each internal region of the cylinder.

Therefore, the scale of the cylinder to equalize the temperature distribution for each internal region of the cylinder may be limited and the hydrogen production volume may also be limited.

### SUMMARY

An object of the present disclosure is to provide a hydrogen generation device in which a uniform quantity of fuel may be supplied to a plurality of combustion units provided for each cylinder, thus to equalize the temperature distribution for each internal region of a plurality of cylinders and increase the hydrogen production volume, and as a result, it is possible to contribute to environmental friendliness and produce clean energy.

In addition, another object of the present disclosure is to provide a hydrogen generation device which may automatically reduce a flow rate of a specific pipe when the flow rate is concentrated in the specific pipe in a structure where a plurality of fuel supply pipes are provided.

Further, another object of the present disclosure is to provide a hydrogen generation device which may stably produce hydrogen even if the flow rate is unevenly supplied within one fuel supply pipe.

The problems to be solved by the present disclosure are not limited to the above-described problems, and other problems not mentioned above may be clearly understood by those skilled in the art from the following descriptions.

To solve problems the present disclosure provides a hydrogen generation device in accordance with claim 1, and a process to produce in a hydrogen generation device in accordance with claim 11. Preferred embodiments are set out in dependent claims.

To achieve the above objects, according to an aspect of the present invention, there is provided a hydrogen generation device including: a plurality of cylinders; a plurality of combustion units disposed in the plurality of cylinders, respectively, to combust a fuel; a distribution unit configured to deliver the fuel supplied from a fuel supply unit to each of the plurality of combustion units by distributing the fuel in a uniform quantity; a plurality of reaction units disposed in the plurality of cylinders, respectively, to generate hydrogen by a reforming reaction of a feed supplied from a feed supply unit while the reaction units are heated by a combustion heat transmitted from the combustion unit; and a metering unit disposed between the distribution unit and the combustion unit respectively in each of the cylinders to adjust an amount of the fuel delivered from the distribution unit to the combustion unit in a fixed quantity. The metering unit includes: a connection pipe disposed between the distribution unit and the combustion unit; and an opening adjuster disposed in the connection pipe to change an opening degree of the connection pipe depending on a hydraulic pressure of the fuel.

In one embodiment, the opening adjuster may include: a valve seat which extends from an inner peripheral surface of the connection pipe and has a seat hole formed therein through which the fuel passes; a valve disc which moves relative to the seat hole depending on the hydraulic pressure of the fuel to change the opening degree of the connection pipe; and a connector which connects the valve disc to the valve seat to be moved relative thereto.

In one embodiment, the connector may include an elastic member configured to move the valve disc in a direction away from the valve seat.

In one embodiment, the valve disc may have at least one disc hole formed therein.

In one embodiment, the valve seat may have a shape in which a plurality of tubes having a relatively smaller diameter toward a flow direction of the fuel are connected with each other.

In one embodiment, the opening adjuster may further include: an auxiliary valve seat which is located upstream from the valve seat based on flow of the fuel, and extends from the inner peripheral surface of the connection pipe to form a seat hole through which the fuel passes; and an auxiliary connector which connects the auxiliary valve seat and the valve disc.

In one embodiment, the connector may include an elastic member configured to generate an elastic force to move the valve disc in a direction away from the valve seat, and the auxiliary connector may include an elastic member configured to generate an elastic force to move the valve disc in a direction closer to the auxiliary valve seat.

In one embodiment, an elastic modulus of the elastic member included in the auxiliary connector may be smaller than an elastic modulus of the elastic member included in the connector.

In one embodiment, the opening adjuster may further include: a guide ring disposed in close contact with an inner wall of the connection pipe to be moved along the inner wall of the connection pipe; and a guide ring connector which connects the guide ring and the valve disc.

In one embodiment, the hydrogen generation device may further include: an auxiliary distribution unit configured to deliver the feed supplied from the feed supply unit to each of the plurality of reaction units by distributing the feed in a uniform quantity; and auxiliary metering units disposed in each of the plurality of reaction units to adjust an amount of the feed supplied to the reaction unit in a fixed quantity. The auxiliary metering unit may optionally have an opening adjuster to adjust the amount of the feed.

In the hydrogen generation device according to an embodiment of the present disclosure, a uniform quantity of fuel may be supplied to the plurality of combustion units disposed in each of the plurality of cylinders having a size capable of equalizing the temperature distribution for each internal region. Thereby, the temperature distribution for each internal region of the plurality of cylinders may be equalized, and the hydrogen production volume may be increased.

In a further aspect a method to produce hydrogen in a hydrogen generation device, which comprises a plurality of combustion units to combust a fuel, and a plurality of reaction units, wherein the method comprises supplying the fuel and distributing the fuel in a uniform quantity to each of the plurality of combustion units, reacting the supplied fuel in each of the reaction units heated by the heat transmitted from the combustion unit in order to generate hydrogen, and discharging hydrogen generated in each of the reaction unit, wherein supplying the fuel is adjusted to deliver fuel in a fixed quantity to each of the combustion unit.
In one embodiment, the fuel may be supplied and distributed to each of the plurality of combustion units in a uniform quantity to equalize the temperature distribution for each internal region of a plurality of cylinders which respectively accommodate the plurality of combustion units; and/or supplying the fuel may set the temperature in each of the combustion unit to be, during the production phase, in a range of 800 to 900°C.

In one embodiment of the method, a stable total amount of hydrogen may be produced by controlling the flow rate in a plurality of cylinders which respectively accommodate the plurality of combustion units.

In one embodiment of the method, the distributing of the fuel for transferring fuel to in a uniform quantity to each of the plurality of combustion units (200) is carried out by changing an opening degree of a connection pipe disposed upstream of each of the combustion units, respectively.

In one embodiment of the method, hydrogen is produced using a hydrogen steam reforming reaction or an ammonia reforming reaction.

In the hydrogen generation device according to an embodiment of the present disclosure, even if an unevenness in a flow rate occurs inside one cylinder, hydrogen may be stably produced by stably controlling the flow rate of the corresponding cylinder.

The effects of the present disclosure are not limited to the above-described effects, and other effects not mentioned above may be clearly understood by those skilled in the art from the following descriptions.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a block diagram illustrating the configuration of a hydrogen generation device according to an embodiment of the present disclosure;
FIG. 2 is a perspective view illustrating a distribution unit of the hydrogen generation device according to an embodiment of the present disclosure;
FIGS. 3 and 4 are cross-sectional views illustrating a first embodiment of a metering unit of the hydrogen generation device according to an embodiment of the present disclosure;
FIG. 5 is a cross-sectional view schematically illustrating the first embodiment of the metering unit, a combustion unit and a reaction unit of the hydrogen generation device according to an embodiment of the present disclosure;
FIGS. 6 and 7 are cross-sectional views illustrating a second embodiment of the metering unit of the hydrogen generation device according to an embodiment of the present disclosure;
FIG. 8 is a cross-sectional view schematically illustrating a second embodiment of the metering unit, a combustion unit, and a reaction unit of a hydrogen generation device according to another embodiment of the present disclosure;
FIG. 9 is a cross-sectional view illustrating a state where uneven flow rate occurs within the metering unit of the hydrogen generation device according to an embodiment of the present disclosure;
FIGS. 10 and 11 are cross-sectional views illustrating a third embodiment of the metering unit of the hydrogen generation device according to an embodiment of the present disclosure; and
FIG. 12 is a cross-sectional view illustrating a fourth embodiment of the metering unit of the hydrogen generation device according to an embodiment of the present disclosure.

### DETAILED DESCRIPTION OF THE EMBODIMENTS

The above and other aspects, features, and advantages of the present disclosure will become apparent from the detailed description of the embodiments to be described in detail below in conjunction with the accompanying drawing. In this regard, it should be understood that the present disclosure is not limited to the following embodiments and may be embodied in various different ways, and that the embodiments are given to provide complete disclosure of the present disclosure and to provide a thorough understanding of the present disclosure to a person who has a common knowledge in the technical field to which the present disclosure belongs. The present disclosure is defined only by the scope of the claims.

Terms used herein are for the purpose of describing particular embodiments only and are not intended to limit the present disclosure thereto. As used herein, singular forms are intended to include the plural forms as well, unless the context clearly indicates otherwise. It will be further understood that the terms "comprises" and/or "comprising," as used herein, do not preclude the presence or addition of one or more elements other than those mentioned. Like reference numerals refer to like elements throughout the present disclosure, and "and/or" includes each mentioned component and all of one or more combinations of the mentioned components. Although a "first," a "second," etc. are used to describe various components, these components are of course not limited by these terms. These terms are merely used to distinguish one component from another component. Therefore, it goes without saying that the first component mentioned below may also be the second component within the technical spirit of the present disclosure.

Unless otherwise defined, all terms (including technical and scientific terms) used herein have the same meaning as commonly understood by one of ordinary skill in the art to which the present disclosure pertains. Terms, such as those defined in commonly used dictionaries, are not to be construed in an idealized or overly formal sense unless expressly so defined herein.

Hereinafter, the present invention will be described in detail with reference to the accompanying drawings.

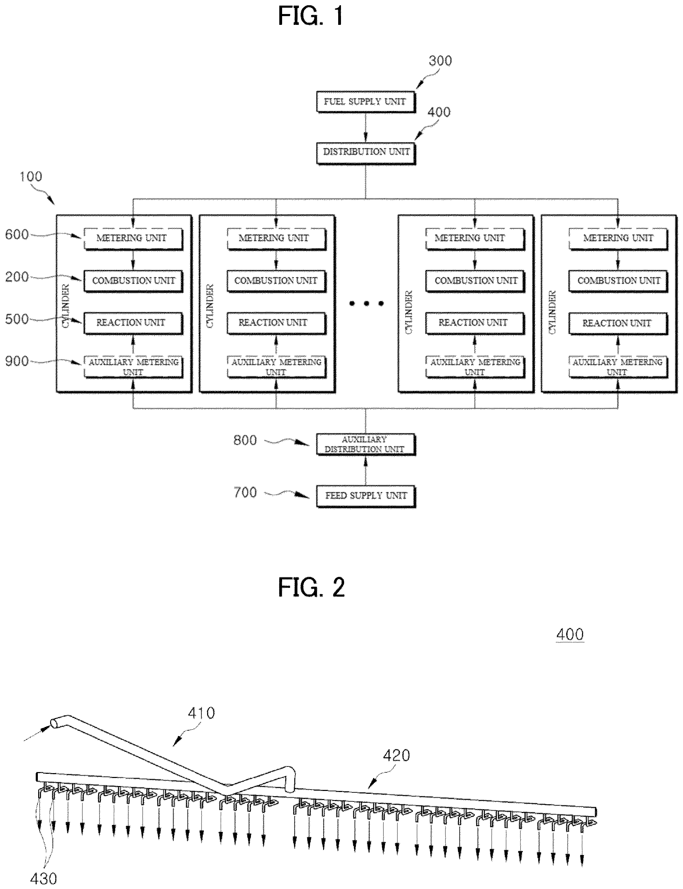

FIG. 1 is a block diagram illustrating the configuration of a hydrogen generation device according to an embodiment of the present disclosure. FIG. 2 is a perspective view illustrating a distribution unit of the hydrogen generation device according to an embodiment of the present disclosure;

As shown in FIG. 1, the hydrogen generation device according to an embodiment of the present disclosure may include a plurality of cylinders 100, a plurality of combustion units 200, a fuel supply unit 300, a distribution unit 400 and a plurality of reaction units 500.

The plurality of cylinders 100 may function as a basic body of the hydrogen generation device. The combustion unit 200 and the reaction unit 500 may be disposed in each cylinder 100. In one embodiment, the cylinder 100 may have a shape surrounding the combustion unit 200 and the reaction unit 500.

Each of the plurality of combustion units 200 may be provided in each of the plurality of cylinders 100 to combust fuel. Each combustion unit 200 may receive a uniform quantity of fuel through the fuel supply unit 300 and the distribution unit 400. In one embodiment, the fuel may include hydrogen and nitrogen.

In one embodiment, a burner may be used as the combustion unit 200. The burner may ignite the fuel to generate combustion heat.

The fuel supply unit 300 may serve to supply the fuel to the distribution unit 400. In one embodiment, the fuel supply unit 300 may deliver the fuel stored in a fuel storage tank (not shown) to the distribution unit 400 by pumping the fuel with a fuel pump (not shown).

The distribution unit 400 may deliver the fuel supplied from the fuel supply unit 300 to each of the plurality of combustion units 200 by distributing the fuel in a uniform quantity. Accordingly, as a uniform quantity of fuel is burnt by each of the plurality of combustion units 200, the temperature distribution for each internal region among the plurality of cylinders 100, to which the combustion heat from the plurality of combustion units 200 is respectively transmitted, may be equalized. Thereby, a reforming reaction of the feed may occur in all of the plurality of reaction units 500 disposed in each of the plurality of cylinders 100. For example, if the temperature distributions for each internal region between the plurality of cylinders 100 are different, the reference temperature of a specific cylinder 100 is excessively high while the reference temperature of another specific cylinder 100 is excessively low, such that the reforming reaction of feed may not occur in all cylinders 100. The reference temperature may be 800°C to 900°C.

In one embodiment, the feed may include methane and steam for a steam reforming reaction.

In one embodiment, the feed may include ammonia for an ammonia reforming reaction.

As shown in FIG. 2, the distribution unit 400 may include an inlet pipe 410, a mooring pipe 420, and a plurality of distribution pipes 430.

The fuel supplied from the fuel supply unit 300 may flow into the inlet pipe 410. In one embodiment, the inlet pipe 410 may have a curved pipe shape.

The fuel transferred from the inlet pipe 410 may flow in the mooring pipe 420. Referring to FIG. 2, the mooring pipe 420 may be connected to a lower end of the inlet pipe 410. Accordingly, the fuel flowing into the inlet pipe 410 may be transferred to the mooring pipe 420 by a drop, i.e., by a difference in height.

In one embodiment, the mooring pipe 420 may have a horizontal pipe shape. In another embodiment, the mooring pipe 420 may have a vertical pipe shape.

The plurality of distribution pipes 430 may transfer the fuel flowing in the mooring pipe 420 to each of the plurality of combustion units 200 by distributing the fuel in a uniform quantity.

In one embodiment, the plurality of distribution pipes 430 may be connected to the lower side of the mooring pipe 420 at a predetermined interval. Accordingly, the fuel flowing in the mooring pipe 420 may be distributed to the plurality of distribution pipes 430 by a drop.

In one embodiment, the plurality of distribution pipes 430 may receive a uniform quantity of fuel flowing in the mooring pipe 420 through a distribution valve, respectively. A solenoid valve may be used as the distribution valve.

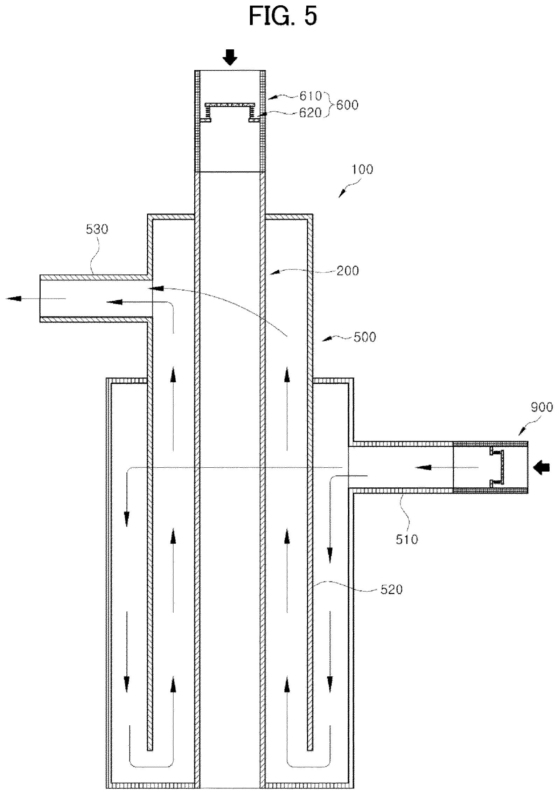

Each of the plurality of reaction units 500 may be disposed in each cylinder 100. Hydrogen may be generated by a reforming reaction of the feed supplied from a feed supply unit 700 while the reaction units 500 are heated by the combustion heat transmitted from the combustion units 200. As shown in FIG. 5 to be further described below, for example, the reaction unit 500 may include a feed supply portion 510 to which the feed is supplied from an outside, a reaction portion 520 in which a reforming reaction of the feed occurs to generate hydrogen, and a discharge portion 530 from which the hydrogen generated in the reaction portion 520 is discharged.

In one embodiment, the feed supply portion 510 may be connected to the reaction portion 520 and may have a shape extending from one side thereof. In one embodiment, the feed supply portion 510 may have a shape surrounding the reaction portion 520. Additionally, the feed supplied to the feed supply portion 510 may be preheated by a preheating device. Additionally, the reaction portion 520 may have a shape surrounding the combustion unit 200. The feed may flow in a zigzag shape inside the feed supply portion 510 and inside the reaction portion 520, and a reaction flow path connecting the feed supply portion 510 and the reaction portion 520 may be formed. Additionally, as shown in FIG. 5 to be described below, the discharge portion 530 may be connected to the reaction portion 520 and may have a shape protruding from the other side of the reaction portion 520.

In one embodiment, the reaction portion 520 may be provided with a catalyst. For example, nickel, potassium, potassium oxide, calcium, magnesium oxide, and suitable other catalysts accelerating the reaction may be used as the catalyst. In one embodiment, the temperature in the reaction portion 520 may be adjusted to 800°C to 900°C by the combustion heat transmitted from the combustion unit 200. In one embodiment, the feed supply unit 700 may deliver the feed stored in a feed storage tank (not shown) to an auxiliary distribution unit 800 to be described below by pumping it with a feed pump (not shown)

Meanwhile, even if the distribution unit 400 delivers the fuel supplied from the fuel supply unit 300 to each of the plurality of combustion units 200 by distributing the fuel in a uniform quantity, an amount of fuel introduced into the plurality of combustion units 200 may be different depending on a hydraulic pressure of the fuel delivered to the plurality of combustion units 200. Accordingly, the hydrogen generation device may further include a metering unit 600 configured to adjust the amount of fuel delivered to the combustion unit 200 by the distribution unit 400 in a fixed quantity.

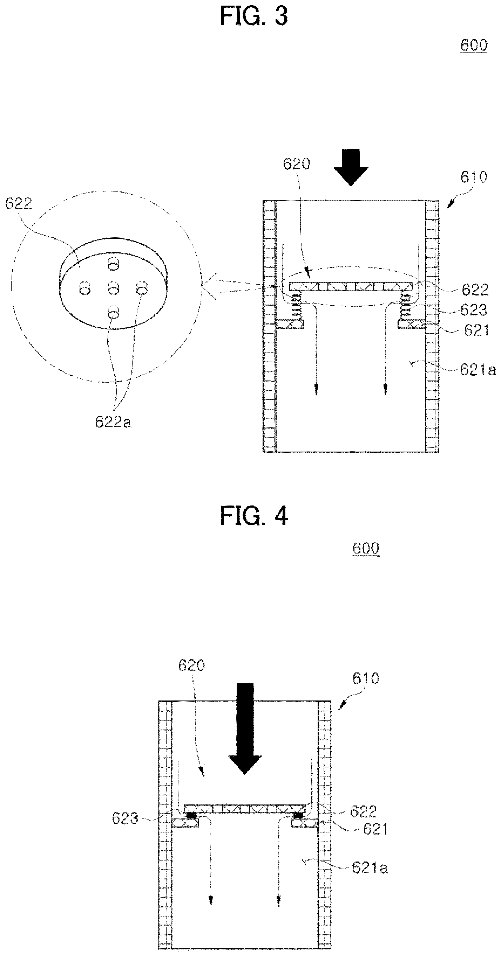

FIGS. 3 and 4 are cross-sectional views illustrating a first embodiment of the metering unit of the hydrogen generation device according to an embodiment of the present disclosure. FIG. 5 is a cross-sectional view schematically illustrating the first embodiment of the metering unit, the combustion unit and the reaction unit of the hydrogen generation device according to an embodiment of the present disclosure;

As shown in FIGS. 3 to 5, in the first embodiment, the metering unit 600 may be disposed between the distribution unit 400 and the combustion unit 200, to adjust the amount of fuel delivered from the distribution unit 400 to the combustion unit 200 in a fixed quantity.

A method to produce hydrogen in the hydrogen generation device is comprised of supplying fuel from a fuel supply unit 300 to the distribution unit 400, distributing fuel in a uniform quantity to each of the plurality of combustion units 200, reacting a feed supplied from a feed supply unit 700 to the reaction units 500 heated by the heat transmitted from the combustion unit 200 in order to generate hydrogen, and discharging hydrogen generated in the reaction unit 500. Preferably, the fuel is supplied from a fuel supply unit 300 to the distribution unit 400 to deliver fuel in a fixed quantity by the metering unit 600. A stable total amount of hydrogen may be produced by controlling the flow rate in the plurality of cylinders 100 which respectively accommodate the plurality of combustion units 200. The distributing of the fuel for transferring fuel to in a uniform quantity to each of the plurality of combustion units 200 may be carried out by changing an opening degree of a connection pipe disposed upstream of each of the combustion units 200. For changing the opening degree of a respective connection pipe, the metering unit described below may be used.

The metering unit 600 may include a connection pipe 610 and an opening adjuster 620.

The connection pipe 610 may be disposed between the distribution unit 400 and the combustion unit 200. In one embodiment, the distribution unit 400 may be connected to an upper end of the connection pipe 610, and the combustion unit 200 may be connected to a lower end of the connection pipe 610. Accordingly, the fuel transferred from the distribution unit 400 may be delivered to the connection pipe 610 and the combustion unit 200 by a drop.

The opening adjuster 620 may be disposed in the connection pipe 610 and may change an opening degree of the connection pipe 610 depending on a hydraulic pressure of the fuel flowing into the connection pipe 610. As shown in FIG. 3, the opening adjuster 620 may include a valve seat 621, a valve disc 622 and a connector 623.

The valve seat 621 may extend from an inner peripheral surface of the connection pipe 610. The valve seat 621 may have a seat hole 621a formed therein, through which the fuel passes. In one embodiment, the seat hole 621a may be formed along a central axis of the valve seat 621. In one embodiment, the valve seat 621 may have a ring shape.

The valve disc 622 may be moved in a direction closer to or away from the seat hole 621a depending on the hydraulic pressure of the fuel flowing into the connection pipe 610 to be delivered, thereby changing the opening degree of the connection pipe 610. The movement of the valve disc 622 will be described in detail below.

The connector 623 may connect the valve seat 621 and the valve disc 622. The connector 623 may connect the valve disc 622 to the valve seat 621 to be moved relative thereto. For example, the valve disc 622 may move by the connector 623 while the valve seat 621 is fixed to the inner peripheral surface of the connection pipe 610.

In one embodiment, the connector 623 may include an elastic member for applying an elastic force to the valve disc 622. The elastic member may generate an elastic force to move the valve disc 622 in a direction away from the valve seat 621.

Therefore, if the hydraulic pressure of the fuel delivered to the valve disc 622 is relatively greater than the elastic force of the elastic member, the elastic member is compressed, and the valve disc 622 may be moved in a direction closer to the seat hole 621a. Accordingly, as shown in FIG. 4, the opening degree of the connection pipe 610 may be reduced.

On the other hand, if the hydraulic pressure of the fuel delivered to the valve disc 622 is relatively smaller than the elastic force of the elastic member, the elastic member is elastically restored and expanded, and the valve disc 622 may be moved in a direction away from the seat hole 621a. Accordingly, as shown in FIG. 3, the opening degree of the connection pipe 610 may be increased.

Meanwhile, if the opening of the connection pipe 610 is completely shut off by the valve disc 622, the flow of fuel in the connection pipe 610 may be blocked. In this regard, the valve disc 622 has at least one disc hole 622a formed therethrough, such that even if the opening of the connection pipe 610 is completely shut off by the valve disc 622, it is possible to prevent the flow of fuel in the connection pipe 610 from being blocked.

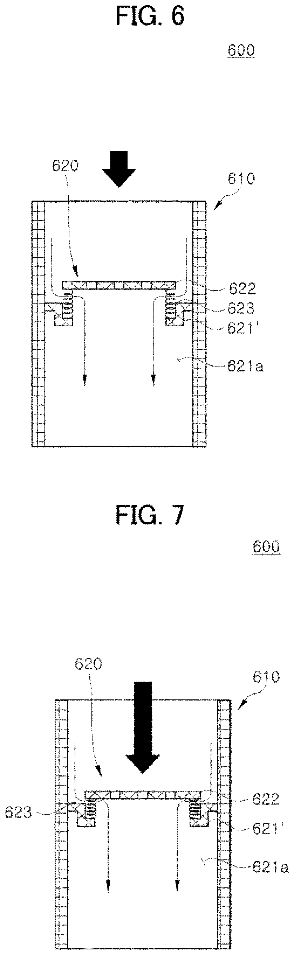

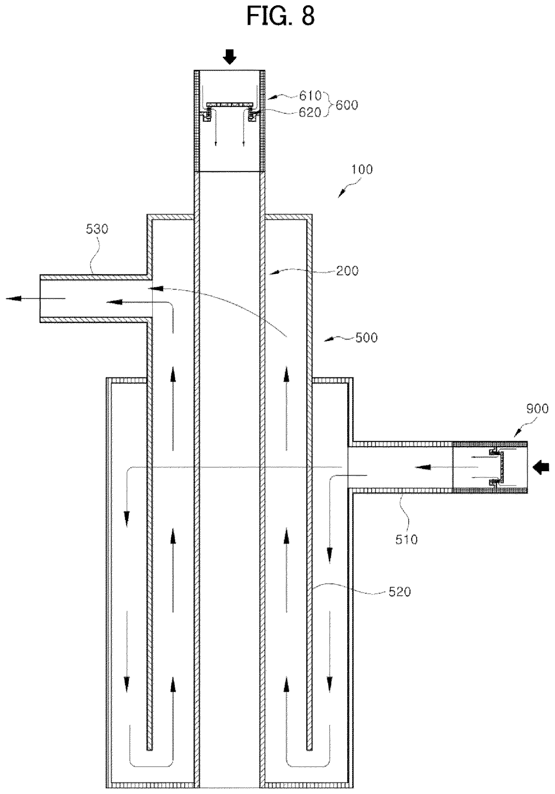

FIGS. 6 and 7 are cross-sectional views illustrating a second embodiment of the metering unit of the hydrogen generation device according to an embodiment of the present disclosure. FIG. 8 is a cross-sectional view schematically illustrating a second embodiment of the metering unit, a combustion unit, and a reaction unit of a hydrogen generation device according to another embodiment of the present disclosure;

As shown in FIGS. 6 to 8, in the second embodiment of a metering unit 600, unlike the first embodiment of the metering unit 600, a valve seat 621' may have a shape in which a plurality of tubes having a relatively smaller diameter toward a flow direction of the fuel in the connection pipe 610 are connected with each other. For example, the valve seat 621' may have a cross section formed in a multistep shape.

In the second embodiment, the diameter of the valve disc 622 may correspond to the diameter of a tube having the smallest diameter among the plurality of tubes.

Accordingly, in the second embodiment of the metering unit 600, a moving distance of the valve disc 622 may be relatively greater than in the first embodiment of the metering unit 600.

The hydrogen generation device according to an embodiment of the present disclosure may further include an auxiliary distribution unit 800 and auxiliary metering units 900.

The auxiliary distribution unit 800 may deliver the feed supplied from the feed supply unit 700 to each of the plurality of reaction units 500 by distributing the feed in a uniform quantity. For example, the auxiliary distribution unit 800 may deliver the feed supplied from the feed supply unit 700 to the feed supply portion 510 of the reaction unit 500.

In one embodiment, the auxiliary distribution unit 800 may have substantially the same structure as the distribution unit 400.

The auxiliary metering units 900 may be disposed in each of the reaction units 500 to adjust an amount of feed supplied to the reaction unit 500 in a fixed quantity. In one embodiment, the auxiliary metering unit 900 may be disposed in the feed supply portion 510 of the reaction unit 500.

In one embodiment, the auxiliary metering unit 900 may have substantially the same structure as the first embodiment of the metering unit 600.

In one embodiment, the auxiliary metering unit 900 may have substantially the same structure as the second embodiment of the metering unit 600.

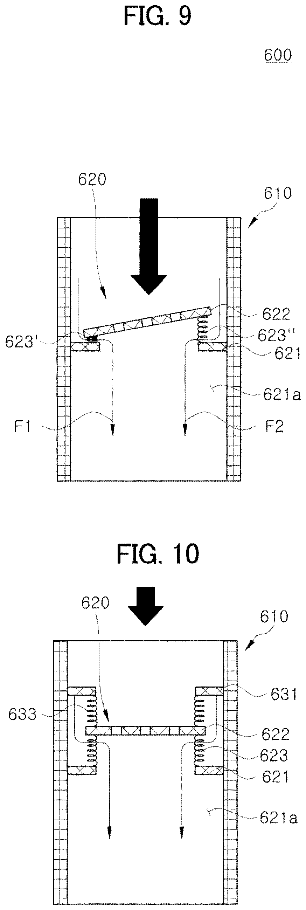

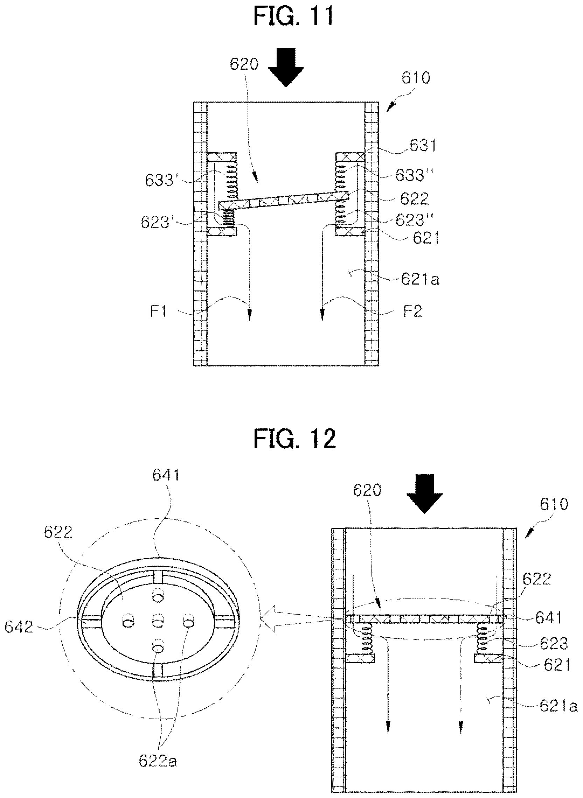

FIG. 9 is a cross-sectional view illustrating a state where uneven flow rate occurs within the metering unit of the hydrogen generation device according to an embodiment of the present disclosure. FIGS. 10 and 11 are cross-sectional views illustrating a third embodiment of the metering unit of the hydrogen generation device according to an embodiment of the present disclosure.

Referring to FIG. 9, an unevenness in a flow rate may occur within the metering unit 600 of the hydrogen generation device according to an embodiment of the present disclosure. As an example, as shown in FIG. 9, non-uniformity between a first flow rate F1 and a second flow rate F2 may occur in the metering unit 600.

In this case, magnitudes of forces applied to a first connector 623' and a second connector 623" which connect the valve seat 621 and the valve disc 622 on opposite sides may be different from each other, and compression degrees of the respective connectors may be different from each other. Accordingly, the valve disc 622 may be tilted, and the opening adjuster 620 may not temporarily adjust the flow rate.

In this regard, the opening adjuster 620 included in the hydrogen generation device according to an embodiment of the present disclosure may further include an auxiliary valve seat 631 and an auxiliary connector 633. Accordingly, tilting of the valve disc 622 due to the uneven flow rate may be prevented.

As shown in FIG. 10, an auxiliary valve seat 631 may be located upstream from the valve seat 621 based on flow of the fuel, and may be fixed to an inner wall of the connection pipe 610. One end of each of the plurality of auxiliary connectors 633 may be connected to the auxiliary valve seat 631, and the other end thereof may be connected to the valve disc 622. The auxiliary connector 633 may be connected to one side of both sides of the valve disc 622, which is a side opposite to the side to which the connector 623 is connected. The auxiliary connector 623 may include an elastic member which generates an elastic force to move the valve disc 622 in a direction closer to the auxiliary valve seat 631.

In one embodiment, similar to the valve seat 621, the auxiliary valve seat 631 may extend from the inner peripheral surface of the connection pipe 610. The auxiliary valve seat 631 may have a seat hole formed therein, through which the fuel passes. In one embodiment, the auxiliary valve seat 631 may have a ring shape.

Referring to FIG. 11, if an unevenness between the first flow rate F1 and the second flow rate F2 occurs in the metering unit, the magnitudes of the forces applied to the first connector 623' and the second connector 623" may be different from each other, and the first connector 623' may be compressed to a greater extent than the second connector 623".

A force applied to the first auxiliary connector 633' may be greater than a force applied to the second auxiliary connector 633". Accordingly, the first auxiliary connector 633' may generate a relatively greater elastic force than the second auxiliary connector 633". The elastic forces generated by the first auxiliary connector 633' and the second auxiliary connector 633" may be elastic forces to move the valve disc 622 in a direction closer to the auxiliary valve seat 631.

The first auxiliary connector 633' may provide an elastic force in a direction opposite to a force applied to the first connector 623', and the second auxiliary connector 633" may provide an elastic force in a direction opposite to a force applied to the second connector 623". The first auxiliary connector 633' generates a relatively greater elastic force than the second auxiliary connector 633 ", and thus the imbalance in the forces applied to the first connector 623' and the second connector 623" may be alleviated. Accordingly, despite the unevenness in the flow rate within the metering unit 600, a tilting degree of the valve disc 622 may be greatly reduced.

In one embodiment, an elastic modulus of the elastic member included in the auxiliary connector 633 may be smaller than an elastic modulus of the elastic member included in the connector 623. Accordingly, the auxiliary connector 633 may be used to prevent the valve disc 622 from being tilted.

FIG. 12 is a cross-sectional view illustrating a fourth embodiment of the metering unit of the hydrogen generation device according to an embodiment of the present disclosure.

Referring to FIG. 12, the opening adjuster 620 included in the hydrogen generation device according to an embodiment of the present disclosure may further include a guide ring 641 and a plurality of guide ring connectors 642.

The guide ring 641 is disposed in close contact with the inner wall of the connection pipe 610 to be moved along the inner wall of the connection pipe 610 in an up and down direction, i.e., a vertical direction. The vertical direction refers to a direction parallel to a direction in which the connection pipe 610 extends, and an upstream direction in terms of the fuel flow is upward, and a downstream direction is downward.

In one embodiment, the guide ring 641 may have a ring shape.

The guide ring connectors 642 may connect the guide ring 641 and the valve disc 622. Accordingly, a vertical movement of the guide ring 641 may occur together with a vertical movement of the valve disc 622.

The guide ring 641 may be formed to have a minimum thickness so as not to interfere the flow of fuel. The guide ring 641 may prevent the valve disc 622 from tilting within the metering unit 600, which may be caused by the uneven flow rate occurring within the metering unit 600. For example, the guide ring 641 moves in the vertical direction in close contact with the inner wall of the connection pipe 610, so that tilting thereof may be prevented even when forces of different magnitudes are applied to each region of the guide ring 641. Accordingly, even if an unevenness in the flow rate occurs within the metering unit 600, the guide ring 641 may only move in the vertical direction without being tilted. Therefore, even if the unevenness in the flow rate occurs within the metering unit 600, the valve disc 622 may only move in the vertical direction by the guide ring 641.

The guide ring 641 and the guide ring connectors 642 may be utilized together with the auxiliary valve seat 631 and auxiliary connector 633 shown in FIG. 10.

In the hydrogen generation device according to an embodiment of the present disclosure, a uniform quantity of fuel may be supplied to the plurality of combustion units 200 provided in each of the plurality of cylinders 100 having a size capable of equalizing the temperature distribution for each internal region. Thereby, the temperature distribution for each internal region of the plurality of cylinders 100 may be equalized, and the hydrogen production volume may be increased.

In the hydrogen generation device according to an embodiment of the present disclosure, even if an unevenness in the flow rate occurs inside one cylinder, hydrogen may be stably produced by stably controlling the flow rate of the corresponding cylinder.

As such, embodiments of the present disclosure have been described with reference to the accompanying drawings, but it should be understood by those skilled in the art that the present disclosure may be implemented in other specific embodiments without changing the technical idea and essential characteristics of the disclosure. Accordingly, it should be understood that the above-described embodiments are only intended to illustrate the present disclosure and are not intended to limit the scope thereof in all aspects.

## Claims

1. A hydrogen generation device comprising:
a plurality of cylinders (100);
a plurality of combustion units (200) disposed in the plurality of cylinders (100), respectively, to combust a fuel;
a distribution unit (400) configured to deliver the fuel supplied from a fuel supply unit (300) to each of the plurality of combustion units (200) by distributing the fuel in a uniform quantity;
a plurality of reaction units (500) disposed in the plurality of cylinders (100), respectively, to generate hydrogen by a reforming reaction of a feed supplied from a feed supply unit (700) while the reaction units (500) are heated by a combustion heat transmitted from the combustion unit (200); and
a metering unit (600) disposed between the distribution unit (400) and the combustion unit (200) respectively in each of the cylinders (100) to adjust an amount of the fuel delivered from the distribution unit (400) to the combustion unit (200) in a fixed quantity,
wherein the respective metering unit (600) comprises:
a connection pipe (610) disposed between the distribution unit (400) and the combustion unit (200); and
an opening adjuster (620) disposed in the connection pipe (610) to change an opening degree of the connection pipe (610) depending on a hydraulic pressure of the fuel.

2. The hydrogen generation device according to claim 1, wherein the opening adjuster (620) comprises:
a valve seat (621) extending from an inner peripheral surface of the connection pipe (610) and having a seat hole (621a) formed therein through which the fuel passes;
a valve disc (622) which moves relative to the seat hole (621a) depending on the hydraulic pressure of the fuel to change the opening degree of the connection pipe (610); and
a connector (623, 633, 642) which connects the valve disc (622) to the valve seat (621) to be moved relative thereto.

3. The hydrogen generation device according to claim 2, wherein the connector (623, 633, 642) comprises an elastic member configured to move the valve disc (622) in a direction away from the valve seat (621).

4. The hydrogen generation device according to claim 2 or 3, wherein the valve disc (622) has at least one disc hole formed therein.

5. The hydrogen generation device according to any one of claims 2 to 4, wherein the valve seat (621) has a shape in which a plurality of tubes having a relatively smaller diameter toward a flow direction of the fuel are connected with each other.

6. The hydrogen generation device according to any one of claims 2 to 5, wherein the opening adjuster (620) further comprises:
an auxiliary valve seat (631) located upstream from the valve seat (621) based on flow of the fuel, and extending from the inner peripheral surface of the connection pipe (610) to form a seat hole (621a) through which the fuel passes; and
an auxiliary connector (623, 633) which connects the auxiliary valve seat (631) and the valve disc (622).

7. The hydrogen generation device according to claim 6, wherein the connector (623, 633, 642) comprises an elastic member configured to generate an elastic force to move the valve disc (622) in a direction away from the valve seat (621), and
the auxiliary connector (623, 633) comprises an elastic member configured to generate an elastic force to move the valve disc (622) in a direction closer to the auxiliary valve seat (631).

8. The hydrogen generation device according to claim 7, wherein an elastic modulus of the elastic member included in the auxiliary connector (623, 633) is smaller than an elastic modulus of the elastic member included in the connector (623, 633, 642).

9. The hydrogen generation device according to any one of claims 2 to 8, wherein the opening adjuster (620) further comprises:
a guide ring (641) disposed in contact with an inner wall of the connection pipe (610) to be moved along the inner wall of the connection pipe (610); and
a guide ring connector (642) which connects the guide ring (641) and the valve disc (622).

10. The hydrogen generation device according to any one of the preceding claims, further comprising:
an auxiliary distribution unit (800), which further to the distribution unit (400) is configured to deliver the feed supplied from the feed supply unit (700) to each of the plurality of reaction units (500) by distributing the feed in a uniform quantity; and
an auxiliary metering unit (900), which further to the metering unit (600) is disposed in the reaction units (500) to adjust an amount of the feed supplied to the reaction unit (500) in a fixed quantity,
optionally wherein a further opening adjuster is comprised in the auxiliary metering unit (900) to adjust the amount of the feed.

11. A method to produce hydrogen in a hydrogen generation device which comprises a plurality of combustion units (200) to combust a fuel and a plurality of reaction units (500), the method comprising:
supplying the fuel and distributing the fuel in a uniform quantity to each of the plurality of combustion units (200);
reacting the supplied fuel in each of the reaction units (500) heated by the heat transmitted from the combustion unit (200) in order to generate hydrogen; and
discharging hydrogen generated in each of the reaction unit (500);
wherein supplying the fuel is adjusted to deliver fuel in a fixed quantity to each of the combustion units (200).

12. The method of claim 11, wherein the fuel is supplied and distributed to each of the plurality of combustion units (200) in a uniform quantity to equalize the temperature distribution for each internal region of a plurality of cylinders (100) which respectively accommodate the plurality of combustion units (200),
wherein the supplying and the distributing of the fuel sets the temperature in each of the combustion unit to be, during the production phase, in a range of 800 to 900°C.

13. The method of claim 11 or 12, wherein a stable total amount of hydrogen is produced by controlling the flow rate in a plurality of cylinders (100) which respectively accommodate the plurality of combustion units (200).

14. The method of any one of claims 11 to 13,
wherein the distributing of the fuel for transferring fuel to in a uniform quantity to each of the plurality of combustion units (200) is carried out by changing an opening degree of a connection pipe (610) disposed upstream of each of the combustion units (200), respectively.

15. The method of any one of claims 11 to 14, wherein hydrogen is produced using a hydrogen steam reforming reaction or an ammonia reforming reaction.
